# EUROPEAN PATENT SPECIFICATION

(11) **EP 1 106 437 B1**
(45) Date of publication and mention of the grant of the patent: **01.10.2003**
(21) Application number: 00108776.6
(22) Date of filing: 25.04.2000
(51) Int. Cl.: B60R 9/10

(54) **Vehicular bicycle rack**
Kraftfahrzeugfahrradträger
Porte-bicyclettes pour véhicules à moteur

(30) Priority: 30.11.1999 IT VI990103 U
(43) Date of publication of application: 13.06.2001
(73) Proprietor: Peruzzo, Angelo, 36027 Rosa' (Vi) (IT)
(72) Inventor: Peruzzo, Angelo, 36027 Rosa' (Vi) (IT)
(74) Representative: Forattini, Amelia

(56) References cited:
- FR-A- 2 744 683
- US-A- 5 658 119
- US-A- 5 762 248
- US-A- 5 820 002

## Description

The present invention relates to a vehicular bicycle rack, particularly useful for carrying bicycles of any kind with a car.

Conventional bicycle racks for cars generally comprise tubular members to be fixed to the body of the car and, in particular, to the roof or hatch of the boot. The devices to be associated with the roof or hatch are constituted by a structure for supporting the bicycles, which are arranged in the direction of travel of the car, and by a means for anchoring the bicycles to the structure. In greater detail, the structure comprises two members to be fixed to the roof at right angles to its direction of travel and a plurality of hollow rails which are arranged in the direction of travel and are adapted to receive the wheels of the bicycles. The anchoring means is constituted by two members which lock each bicycle to the structure. In particular, the locking members are two tubular segments which are hinged to the transverse member of the structure that is arranged at the front, respectively on either side of the bicycle, and are clamp-shaped in order to lock the inclined lower tube of the frame in the central portion.

There are other commercially available devices for carrying bicycles on the roof of a car. For example, a conventional device comprises an arm which is pivoted in the central part of the roof of the car and ends with a clamp adapted to lock the body of one of the pedal cranks of the bicycle. In particular, the pedal crank is locked either in a substantially horizontal position or in a forwardly and downwardly inclined position.

The main drawback of the above described first type of device is that the inclined tube of the bicycle frame has a cross-section whose shape and dimensions vary considerably. Accordingly, the clamp formed by the two tubular segments is unable to ensure steady locking of the bicycle so as to prevent its lateral oscillation.

The main drawback of the above described second type of device is that it is rather complicated to apply to the body of the car. It is in fact necessary to provide several holes on the roof of the car for receiving corresponding fastening screws which are adapted to retain a supporting body which in turn accommodates the end of the arm that lies opposite the one provided with the clamp.

US-5,762,248 discloses a bicycle carrier, for retaining a bicycle on a vehicle roof, having an upwardly extending arm provided with a gripping device for gripping the frame of the bicycle.
US-5,820,002 discloses a vehicle mounted bicycle carrier having a locking mechanism adapted to lock one of the bicycle pedal cranks.
An aim of the present invention is to overcome the above cited drawbacks of the prior art devices for carrying bicycles on a car.

An object of the invention is to provide a vehicular bicycle rack for anchoring bicycles and the like to a motor vehicle which allows to lock the bicycles to the vehicle body rapidly, easily and most of all safely.
A further object of the invention is to provide a bicycle rack which allows to lock each bicycle at the center-of-gravity region, so as to increase its stability against lateral oscillations.
A further object of the invention is to provide a rack in which the forces due to the anchoring are conveniently distributed on the structure of the rack so as to improve the stability of the bicycle.
A further object of the invention is to provide an economically advantageous rack with respect to conventional racks.
This aim, these objects and others which will become apparent hereinafter are achieved by a vehicular bicycle rack as claimed in the appended claims.
Further characteristics and advantages of the present invention will become apparent from the following detailed description of an embodiment thereof, illustrated only by way of non-limitative example in the accompanying drawings, wherein:

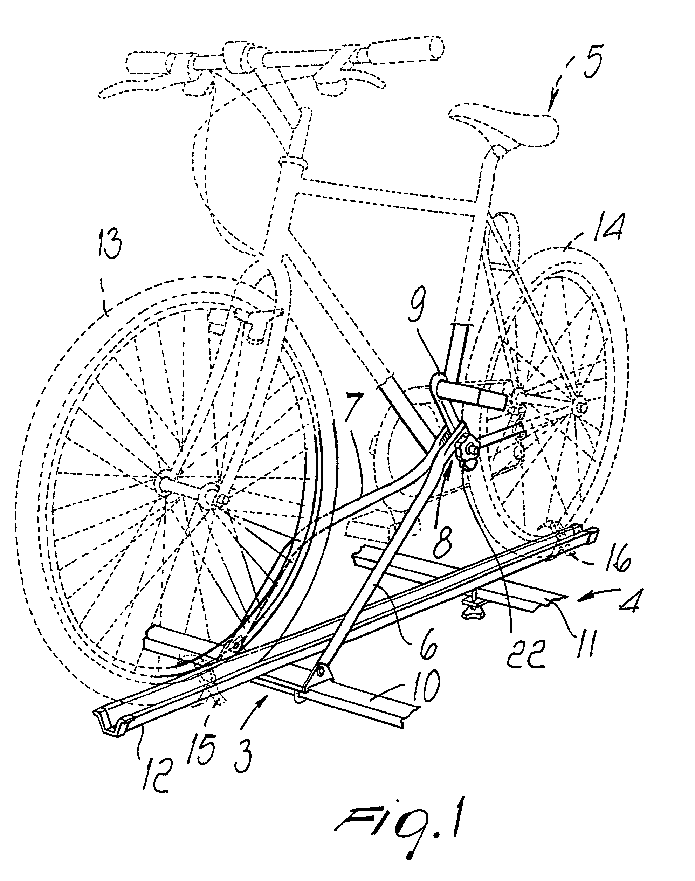

Fig. 1 is a perspective view of the vehicular bicycle rack according to the invention, showing a bicycle fixed to the rack;

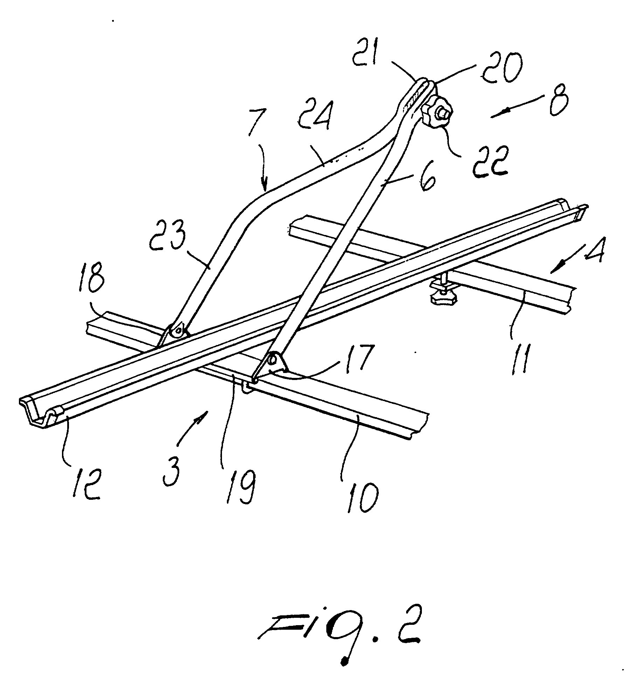

Fig. 2 is a perspective view of the rack according to the invention.

With reference to the accompanying figures, the vehicular bicycle rack, for anchoring bicycles and the like to a motor vehicle, is particularly suitable to be associated with the roof of the car. The rack, generally designated by the reference numeral 3, comprises a structure 4 for supporting one or more bicycles 5 on the roof of the car, and two members, designated by the reference numerals 6 and 7 respectively, for each bicycle 5, which are hinged to the structure 4 and form a clamp 8 for locking the body of at least one of the pedal cranks 9 of bicycle 5. In greater detail, the structure 4 comprises two tubular members, designated by the reference numerals 10 and 11 respectively, to be associated with the roof of the car substantially at right angles to the direction of travel of the car. Grooved rails 12 are associated with the members 10 and 11 so as to be directed upward. Each grooved rail is adapted to accommodate wheels 13 and 14 of bicycle 5. The wheels 13 and 14 are fixed to the hollow rail 12 by means of straps 15 and 16. The anchoring members 6 and 7 are in the form of tubular segments which are hinged to the member 10 on either side of the bicycle 5. More specifically, segment 6 is hinged to the wing 17, by one end, and segment 7 is hinged to the wing 18, by its own end. The wings 17 and 18 are formed on a plate 19 which is fixed to the member 10 under the grooved rail 12. At their other ends, the members 6 and 7 form the clamp 8. More specifically, the clamp consists of the end portions of the members 6 and 7, which are flattened and are provided with a transverse through hole (not shown) which accommodates a screw which in turn supports, on its threaded end, a knob 22 which allows to clamp the end portions 20 and 21 against the body of the pedal crank 9. Preferably, the end portions 20 and 21 are internally provided with grooves adapted to prevent mutual sliding with respect to the body of the pedal crank 9, or, alternatively, are provided with plastic claddings (not shown) for the same purpose. Member 6 is approximately straight, while member 7 is shaped so as to bend toward member 6. In particular, starting from the point where member 7 is pivoted to the wing 18, member 7 includes a first straight portion 23 and a second straight portion 24 which is bent with respect to the first portion 23 toward member 6. In this manner, by virtue of the shape of member 7 it is possible to provide an apparatus 3 which achieves the advantages that can be observed in the first described prior art device and further allows to lock the pedal crank 9 which, differently from the inclined tube of the frame of bicycle 5, practically has the same dimensions and the same cross-section for most bicycles. Members 6 and 7 can of course be formed by using tubular segments having any cross-section and dimensions without thereby abandoning the scope of the present invention.

The operation of the apparatus is described hereinafter with reference to the accompanying figures. Once the apparatus 3 has been fixed to the roof of the car, it is sufficient to arrange a bicycle 5 so that the wheels 13 and 14 lie inside the grooved rail 12 and fix them to the rail by means of straps 15 and 16. Keeping the bicycle 5 vertical, members 6 and 7 are turned counterclockwise and then the body of the crank 9 is accommodated between the end portions 20 and 21 of members 6 and 7. At this point, knob 22 is screwed in order to tighten the clamp 8 and thus achieve correct anchoring of the bicycle 5 to the rack. In order to remove the bicycle 5 from the rack, and remove the rack from the car, the above described operations are performed in reverse. With this rack it is of course possible to arrange more than one bicycle 5, parallel to the direction of travel of the car.

The vehicular bicycle rack for anchoring bicycles and the like to a motor vehicle, according to the invention, achieves the intended aim and objects, allowing a rapid, easy and, most of all, safe fastening of the bicycle. Moreover, the anchoring point of the bicycle is located in the center-of-gravity region of the bicycle, so as to increase its stability against lateral oscillations. Finally, the apparatus is simple and easy to manufacture and therefore can be mass-produced at a very advantageous cost.

In practice, the materials used, as well as the dimensions, may be any according to requirements.

## Claims

1. A vehicular bicycle rack, for anchoring bicycles and the like to a motor vehicle, comprising a structure (4) for supporting one or more bicycles (5) to be associated with the body of a vehicle; said structure (4) comprising at least two members (6,7) for each one of said bicycles, said members (6,7) being hinged to said structure and being shaped as a clamp for locking the body of at least one of the pedal cranks (9) of each one of said bicycles, **characterized in that** one member (7) of said pair of members is shaped so as to bend toward the other member (6) of said pair of members.

2. The rack according to claim 1, **characterized in that** said shaped member (7) comprises, starting from its pivoting point, at least one first straight portion (23) and one second straight portion (24) which is bent with respect to said first straight portion toward the other member (6) of said pair of members.

3. The rack according to one or more of the preceding claims, **characterized in that** the other member (6) of said pair of members is substantially straight.

## Patentansprüche

1. Kraftfahrzeug-Fahrradträger zur Befestigung von Fahrrädern und dergleichen an einem Kraftfahrzeug mit einer Struktur (4) zum Tragen eines oder mehrerer Fahrräder (5) und Verbinden mit dem Fahrzeugkörper, wobei die Struktur (4) wenigstens zwei Bauteile (6, 7) für jedes der Fahrräder aufweist, die Bauteile (6, 7) an der Struktur klappbar sind und wie eine Klammer zum Festhalten des Körpers wenigstens einer der Pedalkurbeln (9) von jedem der Fahrräder geformt sind, **dadurch gekennzeichnet, daß** das eine Bauteil (7) des Bauteilpaares derart geformt ist, daß es in Richtung des anderen Bauteils (6) gebogen ist.

2. Träger nach Anspruch 1, **dadurch gekennzeichnet, daß** das geformte Bauteil (7) beginnend von seinem Drehpunkt wenigstens einen ersten geraden Teil (23) und einen zweiten geraden Teil (24), welcher bezüglich des ersten geraden Teils in Richtung des anderen Bauteils (6) des Bauteilpaares gebogen ist, aufweist.

3. Träger nach einem oder mehreren der vorstehenden Ansprüche, **dadurch gekennzeichnet, daß** das andere Bauteil (6) des Bauteilpaars im wesentlichen gerade ist.

## Revendications

1. Support de bicyclette pour véhicule, destiné à ancrer des bicyclettes et analogue sur un véhicule à moteur, comportant une structure (4) destinée à supporter une ou plusieurs bicyclettes (5) à associer à la carrosserie d'un véhicule, ladite structure (4) comportant au moins deux éléments (6, 7) pour chacune desdites bicyclettes, lesdits éléments (6, 7) étant articulés sur ladite structure et étant formés comme une pince pour bloquer le corps d'au moins une des manivelles de pédale (9) de chacune desdites bicyclettes, **caractérisé en ce que** le premier élément (7) de ladite paire d'éléments est mis en forme de manière à s'incurver en direction de l'autre élément (6) de ladite paire d'éléments.

2. Support selon la revendication 1, **caractérisé en ce que** ledit élément mis en forme (7) comporte, en démarrant à partir de son point de pivotement, au moins une première partie rectiligne (23) et une seconde partie rectiligne (24) qui est coudée par rapport à ladite première partie rectiligne vers l'autre élément (6) de ladite paire d'éléments.

3. Support selon l'une ou plusieurs des revendications précédentes, **caractérisé en ce que** l'autre élément (6) de ladite paire d'éléments est sensiblement rectiligne.
